# EUROPEAN PATENT APPLICATION

(11) **EP 4 404 574 A1**
(43) Date of publication of application: **24.07.2024**
(21) Application number: 22871767.4
(22) Date of filing: 30.08.2022
(51) Int. Cl.: H04N 21/439

(54) **VIDEO PROCESSING METHOD AND APPARATUS, AND MEDIUM AND PROGRAM PRODUCT**

(30) Priority: 24.09.2021 CN 202111124169
(71) Applicant: Beijing Sogou Technology Development Co., Ltd., Beijing 100084 (CN)
(72) Inventor: MENG, Fanbo, Beijing 100084 (CN); LIU, Jinsuo, Beijing 100084 (CN); ZHU, Weiji, Beijing 100084 (CN); ZHANG, Yongzhe, Beijing 100084 (CN); FENG, Tian, Beijing 100084 (CN)
(74) Representative: Gunzelmann, Rainer
(86) International application number: PCT/CN2022/115722
(87) International publication number: WO 2023/045716

(57) **Abstract**

A video processing method and apparatus, and a medium and a program product. The method specifically includes: acquiring a first video clip, the first video clip corresponding to a template text in a first text, and the first video clip comprising a video subclip with a speech pause, and a position of the video subclip in the first video clip corresponding to a boundary position between the template text and a variable text in the first text (101); generating a second video clip corresponding to the variable text (102); and combining the first video clip with the second video clip to obtain a video corresponding to the first text (103). Embodiments of this application can improve the video processing efficiency.

## Description

### RELATED APPLICATION

This application claims priority to Chinese Patent Application No. 202111124169.4, entitled "VIDEO PROCESSING METHOD AND APPARATUS, AND MEDIUM" filed with the Chinese Patent Office on September 24, 2021.

### FIELD OF THE TECHNOLOGY

This application relates to the field of communication technologies, and in particular, to a video processing method and apparatus, a medium, and a program product.

### BACKGROUND OF THE DISCLOSURE

With the development of the communication technology, virtual objects can be widely applied to application scenarios such as a broadcasting scenario, a teaching scenario, a medical scenario, and a customer service scenario. In these application scenarios, the virtual objects usually need to express texts. Accordingly, a video corresponding to the virtual object can be generated and played. The video may represent the process of expressing the text by the virtual object. The process of generating the video usually includes: a speech generation stage and an image sequence generation stage. The text to speech technology is usually used in the speech generation stage. The image processing technique is usually used in the image sequence generation stage.

In the process of implementing embodiments of this application, the inventor found that it is usually high in the related art in time cost of generating a corresponding complete video for a complete text, resulting in low video processing efficiency.

### SUMMARY

How to improve the video processing efficiency has become a technical problem needing to be solved by a person skilled in the art. In view of the problem, embodiments of this application provide a video processing method and apparatus, a medium, and a program product to solve the foregoing problem or at least partially solve the foregoing problem.

To solve the foregoing problem, this application discloses a video processing method, which is performed in an electronic device. The method includes:
acquiring a first video clip, the first video clip corresponding to a template text in a first text, and the first video clip comprising a video subclip with a speech pause, and a position of the video subclip in the first video clip corresponding to a boundary position between the template text and a variable text in the first text;
generating a second video clip corresponding to the variable text; and
combining the first video clip with the second video clip to obtain a video corresponding to the first text.

According to another aspect, this application discloses a video processing apparatus, including:
a provision module, configured to acquire a first video clip, the first video clip corresponding to a template text in a first text, and the first video clip comprising a video subclip with a speech pause, and a position of the video subclip in the first video clip corresponding to a boundary position between the template text and a variable text in the first text;
a generation module, configured to generate a second video clip a second video clip corresponding to the variable text; and
a combining module, configured to combine the first video clip with the second video clip to obtain a video corresponding to the first text.

According to another aspect, this application discloses an apparatus for video processing, including a memory and one or more programs stored in the memory, the program, when executed by one or more processors, implementing the steps of the method.

According to yet another aspect, the embodiments of this application disclose one or more machine-readable media, storing an instruction, the instruction, when executed by one or more processors, causing an apparatus to perform the method according to one or more aspects.

According to yet another aspect, the embodiments of this application disclose a computer program product, including a computer instruction stored in a computer-readable storage medium, the computer instruction, when executed by a processor, causing the processor to perform the video processing method according to the embodiments of this application.

### BRIEF DESCRIPTION OF THE DRAWINGS

FIG. 1A is a schematic diagram of application scenarios according to embodiments of this application.
FIG. 1B is a flowchart for a video processing method according to embodiments of this application.
FIG. 2 is a flowchart for a video processing method according to embodiments of this application.
FIG. 3 is a structural block diagram of a video processing apparatus according to embodiments of this application.
FIG. 4 is a structural block diagram of an apparatus for video processing according to embodiments of this application.
FIG. 5 is a structural block diagram of a server according to some embodiments of this application.

### DESCRIPTION OF EMBODIMENTS

To make the foregoing objectives, features, and advantages of this application clearer and easier to understand, the following further describes this application in detail with reference to the accompanying drawings and specific implementations.

In the embodiments of the present disclosure including the embodiments of both the claims and the specification (hereinafter referred to as "all embodiments of the present disclosure"), a virtual object is a vivid and natural virtual object close to a real object obtained through an object-modeling technique, a motion capture technology, etc. The virtual object can have capabilities such as cognition, or comprehending, or expression through artificial intelligence technologies such as speech recognition and natural-language understanding. The virtual object specifically includes: a virtual character, or a virtual animal, or a two-dimensional cartoon object, or a three-dimensional cartoon object, etc.

For example, in a broadcasting scenario, a virtual object can replace, for example, a media worker for news broadcasting or game commentary, etc. As another example, in a medical scenario, a virtual object can replace, for example, a medical worker for medical guidance, etc.

In all embodiments of the present disclosure, a virtual object may express a text. However, a text and a video corresponding to the virtual object may be generated in the embodiments of this application. The video may specifically include: a speech sequence corresponding to the text, and an image frame sequence corresponding to the speech sequence.

In some application scenarios, a text of a to-be-generated video specifically includes: a template text and a variable text. The template text is relatively fixed or not edited, e.g., the template text is a preset text. The variable text is preferably an editable text. The variable text varies depending on preset factors such as a user input, e.g., the variable text is obtained from the user input.

In all embodiments of the present disclosure, the variable text is determined according to the user input. For example, in a medical scenario, a corresponding variable text is determined according to a disease name included in the user input. Optionally, a field corresponding to the variable text may specifically include: a disease name field, a food type field, an ingredient quantity field, etc. These fields may be determined according to a disease name included in a user input.

It is to be understood that a person skilled in the art may determine the variable text in the text according to actual application requirements. The specific determination manner of the variable text is not limited in the embodiments of this application.

In order to make the video quality meet the requirements, in the related art, a corresponding complete video is usually generated for the changed complete text in a case that the variable text is changed. However, it is usually high in time cost of generating a corresponding complete video for the changed complete text, resulting in low video processing efficiency.

Regarding the technical problem of how to improve the video processing efficiency, the embodiments of this application provide a video processing solution. The solution specifically includes: acquiring a first video clip, the first video clip corresponding to a template text in a first text, and including a video subclip with a speech pause, a position of the video subclip in the first video clip corresponding to a boundary position between the template text and a variable text in the first text, and the first text including the template text and the variable text; generating a second video clip corresponding to the variable text; and combining the first video clip with the second video clip to obtain a video corresponding to the first text.

In all embodiments of the present disclosure, the first video clip corresponding to the template text is combined with the second video clip corresponding to the variable text. The first video clip may be a pre-saved video clip. The second video clip corresponding to the variable text may be generated during the video processing. A length of the to-be-processed variable text is less than that of a complete text. Therefore, the length and the corresponding time cost of the generated video can be decreased in the embodiments of this application, and thus the video processing efficiency can be improved.

Moreover, in all embodiments of the present disclosure, the first video clip includes a video subclip with a speech pause. The speech pause here refers to a speech stop. For example, a virtual object is not speaking in the video subclip. A position of the video subclip in the first video clip corresponds to a boundary position between the template text and the variable text in the first text. Through the video subclip with a speech pause in the first video clip, the intense changes of audios or pictures at a combining position is solved; therefore, the continuity at the combining position can be improved.

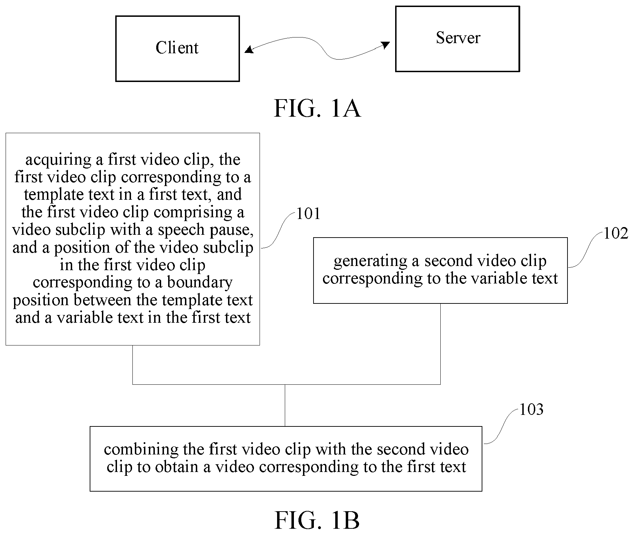

The video processing method provided in the embodiments of this application can be applied to application scenarios corresponding to a client and a server. For example, FIG. 1A is a schematic diagram of application scenarios according to embodiments of this application. The client and the server are located in a wired or wireless network, and perform data interaction through the wired or wireless network.

The client and the server may be collectively referred to as an electronic device. The client includes, but is not limited to: a smartphone, a tablet computer, an ebook reader, a moving picture experts group audio layer III (MP3) player, a moving picture experts group audio layer IV (MP4) player, a laptop portable computer, an on-board computer, a desktop computer, a set-top box, a smart TV, a wearable device, etc. The server is, for example, a hardware-independent server, a virtual server, or a server cluster, etc.

The client corresponds to the server and is an application for providing a local service for a user. In all embodiments of the present disclosure, the client may receive a user input and provide a video corresponding to the user input. The video may be generated by the client or the server. The specific generation subject of the video is not limited in the embodiments of this application.

In all embodiments of the present disclosure, the client may receive a user input and upload same to the server, so that the server generates a video corresponding to the user input. The server may determine a variable text according to the user input, generate a second video clip corresponding to the variable text, and combine a first video clip with the second video clip to obtain the video corresponding to the variable text and the template text.

### Method Embodiment 1

Referring to FIG. 1B, FIG. 1B is a flowchart for a video processing method according to this application. The video processing method may specifically include the following steps, and is performed by, for example, an electronic device:
Step 101: Acquire a first video clip, the first video clip corresponding to a template text in a first text, and the first video clip including a video subclip with a speech pause, and a position of the video subclip in the first video clip corresponding to a boundary position between the template text and a variable text in the first text. The first video clip corresponding to the template text inclues a video clip for expressing the template text and a video subclip with a speech pause.

Step 102: Generate a second video clip corresponding to the variable text.

Step 103: Combine the first video clip with the second video clip to obtain a video corresponding to the first text. The video corresponding to the first text may be considered as a video representation for the first text.

In all embodiments of the present disclosure, at step 101, a first video clip corresponding to a template text is generated in advance. The first video clip includes a video subclip with a speech pause. The speech pause here refers to a speech stop or a temporary speech non-output. The video subclip with a speech pause may be considered as a video subclip without a speech. In other words, the video subclip is a video with a non-speech audio segment. The non-speech audio segment may be referred to as an audio segment without a speech voice, for example, a white noise audio of a predetermined duration equal to the duration of the video subclip. A position of the video subclip corresponds to a boundary position between the template text and the variable text in the first text. The video subclip may avoid sudden changes of the audio signals at the combining position of the first video clip and the second video clip, thereby improving the smoothness of the audio signal in the video corresponding to the first text.

The structure of the first text in the embodiments of this application specifically includes: a template text and a variable text. The boundary position may be used for dividing the first text into a template text and a variable text.

Taking text A as an example, that is, "about the items of <diabetes> and <fruit>, I'm still working on it. I think this dietary advice for <diabetes> may also be helpful to you. It includes recommendations and taboos for about <1800> ingredients. Please click to view". A plurality of boundary positions are present in text A. For example, a boundary position is correspondingly present between a template text "about" and a variable text "<diabetes>"; a boundary position is correspondingly present between the variable text "<diabetes>" and a template text "and"; a boundary position is correspondingly present between the template text "and", and a variable text "<fruit>"; a boundary position is correspondingly present between the variable text "<fruit>" and a template text "of"; etc.

In all embodiments of the present disclosure, the process of determining the first video clip includes: obtaining a target video corresponding to a template text, a preset variable text, and pause information corresponding to the boundary position; and extracting, from the target video, the first video clip.

The preset variable text may be any variable text, or the preset variable text may be any instance of a variable text.

In all embodiments of the present disclosure, the target video may be generated according to a combination of the template text and the preset variable text, and the pause information at the boundary position may be considered in the process of generating the target video. The pause information represents, for example, a speech pause of a predetermined duration. The target video may be considered as a video representation for a combination of a template text, and a preset variable text, where the pause information corresponding to the boundary position is taken into account. As such, there is a video subclip with a speech pause between a video clip for expressing the template text and a video clip for expressing the preset variable text.

In a practical application, the target video may include: a preset speech (i.e.,a speech part) and a preset image sequence (i.e., an image part).

In all embodiments of the present disclosure, the text to speech (TTS) technology can be used to convert the preset text into the preset speech. The preset speech may be represented as a waveform.

In all embodiments of the present disclosure, converting the preset text into the preset speech specifically includes: a linguistic analysis stage and an acoustic system stage. The linguistic analysis stage relates to generating corresponding linguistics information according to the preset text and pause information corresponding to the preset text. The acoustic system stage mainly relates to generating a corresponding preset speech according to the linguistics information provided by the linguistic analysis stage for realizing a function of producing sound.

In one implementation, the processing in the linguistic analysis stage specifically includes: text structure and language judgment, text standardization, text-to-phoneme, and prosody prediction. The linguistics information may be a result of the linguistic analysis stage.

The text structure and language judgment is used for judging the language of the preset text, such as Chinese, English, Tibetan, and Uyghur, segmenting the preset text into statements according to the grammar rules of the corresponding language, and transmitting the segmented statements to the subsequent processing modules.

The text standardization is used for standardizing the segmented statements according to the set rules.

The text-to-phoneme is used for determining phoneme features corresponding to the statements.

Human beings usually have tone and emotion during expression; therefore, the purpose of TTS is often to imitate a real human voice. Therefore, the prosody prediction can be used for determining where and how long a statement needs to be paused, which word or phrase needs to be stressed, which word needs to be unstressed, etc., so that the cadence of the voice is realized.

In all embodiments of the present disclosure, the prosody prediction technology may be used to determine a prosody prediction result, and then update the prosody prediction result according to the pause information.

Taking text A as an example, the pause information is: pause information of a preset duration added between the template text "about" and the variable text "<diabetes>", and the updating the prosody prediction result specifically includes: adding the pause information of the preset duration between phoneme features "guan" and "yu" of the template text "about", and phoneme features "tang", "niao", and "bing" of the variable text "<diabetes>". The updated prosody prediction result is: "guan", "yu", "pausing for N ms", "tang", "niao", "bing", etc. N is a natural number greater than 0. A value of N is determined by a person skilled in the art according to actual application requirements.

In the acoustic system stage, a preset speech meeting requirements may be obtained according to a TTS parameter.

Optionally, the TTS parameter may include: a tone color parameter. The tone color parameter may refer to the distinctive characteristics of the frequencies of different sounds in terms of waveforms. Different sound emitting subjects usually have different tone colors. Therefore, a speech sequence matching the tone color of a target sound emitting subject can be obtained according to the tone color parameter. The target sound emitting subject may be designated by a user. For example, the target sound emitting subject is a designated medical worker, etc. In a practical application, a tone color parameter of the target sound emitting subject may be obtained according to an audio of a preset length of the target sound emitting subject.

The preset image sequence corresponding to the image part may be obtained on the basis of a virtual object image. In other words, in all embodiments of the present disclosure, a state feature may be assigned to the virtual object image to obtain the preset image sequence. The virtual object image may be designated by the user. For example, the virtual object image is an image of a famous person, e.g. a presenter.

The state feature may include at least one of the following features:
an expression feature;
a lip feature; and
a body feature.

An expression can express feelings and may refer to thoughts and feelings expressed on the face.

The expression feature is usually subjected to the whole face. The lip feature may be specially subjected to a lip, and is relevant to a text content, a speech, a sound emitting manner, etc, and therefore can improve the naturalness where the preset image sequence is correspondingly expressed.

The body feature may express the thoughts of a character through coordinated activities of human body parts such as a head, eyes, a neck, hands, elbows, arms, a body, a crotch, and feet so as to vividly express the feelings. The body feature may include: head turning, shoulder shrugging, gestures, etc., and can improve the richness where the image sequence is correspondingly expressed. For example, at least one arm hangs down naturally in a speaking state, and at least one arm rests naturally on the abdomen in a non-speaking state, etc.

In all embodiments of the present disclosure, in the process of generating an image part of the target video, an image parameter may be determined according to the preset text and the pause information, the image parameter being used for representing a state feature of the virtual object; and the preset image sequence corresponding to the image part is generated according to the image parameter.

The image parameter may include: a pause image parameter, which may be used for representing a pause state feature corresponding to the pause information. In other words, the pause image parameter is used for representing a state feature of the virtual object in terms of the body, the expression, etc. in a case that the virtual object stops speaking. Accordingly, the preset image sequence may include: an image sequence corresponding to the pause state feature. For example, the pause state feature includes: a neutral expression, a lip-closed state, an arm-hanging state, etc.

After being generated, the preset speech and the preset image sequence may be combined with each other to obtain the corresponding target video.

After the target video is obtained, the first video clip corresponding to the template text may be extracted from the target video. Specifically, the first video clip is extracted according to a starting position and an ending position of the preset variable text in the target video. For example, a first text includes: a template text and a preset variable text. A starting position and an ending position of the preset variable text are used to locate a video clip for the preset variable text in the target video, to obtain video clip for the preset variable text. Then, the first video clip is obtain by removing the video clip for the preset variable text from the target video.

Taking text A as an example, assuming that a starting position of the preset variable text "<diabetes>" in the text corresponds to a starting position T1 in the target video, and an ending position of the preset variable text "<diabetes>" corresponds to an ending position T2 in the target video, a video clip before T1 can be captured from the target video as the first video clip corresponding to the template text "about". The pause information at the boundary position is taken into account in the process of generating the target video; therefore, the first video clip before T1 includes a video subclip with a speech pause. Hence, the video subclip can improve the smoothness of the audio signal and the continuity at the combining position in the subsequent combining process.

Taking text A as an example, assuming that a starting position of the preset variable text "<fruit>" in the text corresponds to a starting position T3 in the target video, and an ending position of the preset variable text "<fruit>" in the text corresponds to an ending position T4 in the target video, a video clip between T2 and T3 can be captured from the target video as the first video clip corresponding to the template text "and".

The template texts in the preset text are segmented by the preset variable texts into a plurality of template texts. Therefore, in a practical application, first video clips corresponding to a plurality of template texts can be respectively extracted from the target video.

It is to be understood that the manner of acquiring the first video clip by using the pause information at the boundary position in the process of generating the target video is merely an optional embodiment. In fact, a person skilled in the art may also use other acquisition manners according to actual application requirements.

In one embodiment, the video subclip in the first video clip includes a speech pause, and a virtual object in an image of the video subclip is in a non-speaking state. For example, the lips of the virtual object in the video subclip are closed.

In one embodiment, the video subclip is a subclip obtained by pausing.

Pausing the video subclip includes:
replacing a speech signal subsegment of the video subclip with an audio segment without a speech voice, as the speech signal subsegment with the speech pause, wherein the audio segment without a speech voice may be, for example, a white noise audio of a predetermined duration equal to the duration of the video subclip; and
overlaying each image of an image subsequence of the video subclip with a respective image of an image sequence with a target state feature to obtain the overlayed image subsequence where the virtual object is in the non-speaking state, the target state feature being a feature used for representing that the virtual object is in the non-speaking state. In one embodiment, the overlaying includes: adding a value of a pixel in each image of the image subsequence to a value of a collocated pixel of a respective image of an image sequence. In this way, the speech signal subsegment with the speech pause, and the image subsequence where the virtual object is in the non-speaking state may constitute the video subclip.

In one embodiment, one acquisition manner of the first video clip may include: generating a first video according to a template text and a preset variable text; extracting the first video clip corresponding to the template text from the first video; pausing the first video clip at a boundary position.

Taking pausing the speech part as an example, replacing a speech signal subsegment of the video subclip with an audio segment without a speech voice , as the speech signal subsegment with the speech pause. Taking pausing the image part as an example, overlaying each image of an image subsequence of the video subclip with a respective image of an image sequence with a target state feature to obtain the overlayed image subsequence.

After being obtained, the first video clip may be saved, so that in a case that the variable text changes, the first video clip is combined with a second video clip corresponding to the changed variable text (hereinafter referred to as a variable text).

At step 102, the variable text may be obtained according to a user input. It is to be understood that the specific determination manner of the variable text is not limited in the embodiments of this application.

The embodiments of this application may provide the following technical solutions of generating a second video clip corresponding to the variable text:

### Technical solution 1:

In technical solution 1, generating a second video clip corresponding to the variable text specifically includes: determining speech parameters and image parameters for a statement where the variable text is located in the first text, the image parameters being used for representing state features of a virtual object to appear in the video corresponding to the first text, and the speech parameters being used for representing parameters for text to speech; extracting, from the speech parameters and the image parameters, target speech parameters and target image parameters corresponding to the variable text; and generating, according to the target speech parameters and the target image parameters, the second video clip corresponding to the variable text.

In technical solution 1, corresponding speech parameters and image parameters are determined by taking a statement where the variable text is located as a unit, and then target speech parameters and a target image parameters corresponding to the variable text are extracted from the speech parameters and the image parameters of the statement.

A statement is a grammatically self-contained unit composed of a word or a syntactically related group of words expressing an assertion, question, command, wish or exclamation.

In a case that the variable text corresponds to a word, the statement usually includes both the template text and the variable text. Adjacent parameters have correlation in speech parameters or image parameters. Therefore, the target speech parameter corresponding to the variable text, and speech parameters corresponding to the template text in the statement have a certain continuity. In other word, at the combining position of the variable text and the template text, the speech parameters of the variable text and the template text are similar or have little variation. The target image parameters corresponding to the variable text, and image parameters corresponding to the template text in the statement have a certain continuity. In other word, at the combining position of the variable text and the template text, the image parameters of the variable text and the template text are similar or have little variation. On this basis, the smoothness of the second video clip corresponding to the variable text, and a first video clip corresponding to the template text in the statement can be improved, thereby improving the smoothness at the combining position of the first video clip and the second video clip.

In a practical application, the speech parameters is used for representing parameters corresponding to TTS. The speech parameters may include: linguistic features and/or acoustic features.

The linguistic features may include: phoneme features. A phoneme is the smallest unit of speech divided according to the natural properties of speech, and is analyzed according to the pronunciation actions in a syllable. An action constitutes a phoneme. The phoneme may include: a vowel or a consonant.

The acoustic features may be used for representing features of speech from the perspective of vocalization.

The acoustic features may include, but is not limited to the following features:
a prosodic feature (a suprasegmental feature/a supralinguistic feature), which specifically includes a duration-related feature, a fundamental frequency-related feature, an energy-related feature, etc.;
a sound quality feature; and
a spectrum-based correlation analysis feature, which reflects a correlation between a vocal tract shape change and a vocalization movement, and currently mainly includes: a linear prediction cepstral coefficient (LPCC), a mel-frequency cepstral coefficient (MFCC), etc.

It is to be understood that the speech parameter is merely an example. The specific speech parameter is not limited in the embodiments of this application.

In all embodiments of the present disclosure, TTS may be performed on the to-be-processed variable text according to the target speech parameter so as to convert the to-be-processed variable text into a target speech.

The image parameters may be corresponding parameters in generation of the image sequence. The image parameters may be used for determining state features corresponding to a virtual object, or may include: a state feature corresponding to a virtual object. For example, the image parameters includes a lip feature.

In all embodiments of the present disclosure, a state feature corresponding to the target image parameters may be assigned to the virtual object image to obtain a target image sequence. The target speech is combined with the target image sequence to obtain the second video clip.

### Technical solution 2:

In technical solution 2, generating a second video clip corresponding to the variable text specifically includes: according to a preset image parameter of the preset variable text at the boundary position, smoothing target image parameters corresponding to the variable text so as to improve the continuity of the target image parameters and image parameters of the template text at the boundary position; and generating, according to the smoothed target image parameters, the second video clip corresponding to the variable text.

In technical solution 2, the smoothing is performed, according to preset image parameters of the preset variable text at the boundary position, on target image parameters corresponding to the variable text. The preset image parameters of the preset variable text at the boundary position, and the image parameters of the template text at the boundary position have a certain continuity. Therefore, the smoothing can improve the continuity of the target image parameter and the image parameter of the template text at the boundary position. On this basis, the continuity of the second video clip corresponding to the variable text, and a first video clip corresponding to the template text in the statement can be improved, thereby improving the continuity at the combining position.

In all embodiments of the present disclosure, window functions such as Hanning window may be used to perform, according to a preset image parameter, smoothing processing on a target image parameter corresponding to the to-be-processed variable text. It is to be understood that the specific smoothing processing process is not limited in the embodiments of this application.

According to the introductions ahead, in the embodiments of this application, in the process of generating an image part of the target video, image parameters may be determined according to the preset text and the pause information. In the embodiments of this application, the preset image parameters of the preset variable text at the boundary position may be extracted from the image parameters.

Taking text A as an example, assuming that a starting position of the preset variable text "<diabetes>" corresponds to a starting position T1 in the target video, and an ending position of the preset variable text "<diabetes>" corresponds to an ending position T2 in the target video, image parameters between T1 and T2 can be extracted as the preset image parameters of the preset variable text "<diabetes>" at the boundary position.

### Technical solution 3:

In technical solution 3, an image sequence corresponding to the video includes: a background image sequence and a moving image sequence. Generating a second video clip corresponding to the variable text specifically includes: generating a target moving image sequence corresponding to the variable text; determining, according to a preset background image sequence, a target background image sequence corresponding to the variable text; and overlaying each image of the target moving image sequence with a respective image of the target background image sequence to obtain the second video clip corresponding to the variable text.

In a practical application, the image sequence corresponding to the video may be divided into two parts. The first part is: a moving image sequence, which can be used for representing a moving part in a case that the virtual object is expressing, and usually corresponds to preset parts such as a lip, eyes, and arms. The second part is: a background image sequence, which can be used for representing a relatively static part in a case that the virtual object is expressing, and usually corresponds to parts other than the preset parts.

In all embodiments of the present disclosure, the background image sequence may be obtained by presetting. For example, the preset background image sequence of a preset duration is preset, and is cyclically arranged (also referred to as cyclical occurrence) in an image sequence. The moving image sequence may be generated according to the target image parameters corresponding to the variable text.

In a practical application, the moving image sequence may be fused with the background image sequence to obtain the image sequence. For example, each of the moving image sequence is superimposed to a respective background image of the background image sequence to obtain the image sequence.

In technical solution 3, a target background image sequence corresponding to the variable text is determined according to a preset background image sequence corresponding to the variable text. The matching degree between the target background image sequence and the preset background image sequence can be improved, thereby improving the matching degree and continuity between the target background image sequence corresponding to the variable text, and a background image sequence corresponding to the template text.

According to the introductions ahead, in all embodiments of the present disclosure, information of a preset background image sequence corresponding to the preset variable text may be recorded in the process of generating an image part of the target video. For example, the information of the preset background image sequence includes: a start frame identifier and an end frame identifier of the preset background image sequence in the target video, etc. For example, the information of the preset background image sequence includes: a start frame number 100 and an end frame number 125, etc.

In one implementation, in order to improve the matching degree between the target background image sequence and the preset background image sequence at a starting position or an ending position, background images in the target background image sequence located at the head and tail match background images in the preset background image sequence located at the head and tail.

The head may refer to the starting position, and the tail may refer to the ending position. Specifically, background images in the target background image sequence located at the head match background images in the preset background image sequence located at the head. Alternatively, background images in the target background image sequence located at the tail match background images in the preset background image sequence located at the tail.

The preset background image sequence and the background image sequence corresponding to the template text match and are continuous at the boundary position. Therefore, in a case that the target background image sequence matches the preset background image sequence at the boundary position, the matching degree and continuity between the target background image sequence and the background image sequence corresponding to the template text can also be improved.

In order to match the target background image sequence and the preset background image sequence at the boundary position, the manner of determining a target background image sequence corresponding to the to-be-processed variable text may specifically include:
determination manner 1: determining the preset background image sequence as the target background image sequence in a case that the number of corresponding images N1 in the preset background image sequence is equal to the number of corresponding images N2 in the target moving image sequence; or
determination manner 2: removing at least one first background image located in the middle of the preset background image sequence in a case that the number of corresponding images N1 in the preset background image sequence is greater than the number of corresponding images N2 in the target moving image sequence, in a case that at least two frames of first background images are removed, the at least two frames of first background images being not continuously distributed in the preset background image sequence; or
determination manner 3: adding a second background image to the preset background image sequence in a case that the number of corresponding images N1 in the preset background image sequence is less than the number of corresponding images N2 in the target moving image sequence.

In determination manner 1, the preset background image sequence is determined as the target background image sequence in a case that N1 is equal to N2, so that the target background image sequence matches the preset background image sequence at the boundary position.

In a practical application, the number of corresponding images N2 in the target moving image sequence may be determined according to speech duration information corresponding to the to-be-processed variable text. The speech duration information may be determined according to a speech parameter corresponding to the to-be-processed variable text, or the speech duration information may be determined according to a duration of a speech segment corresponding to the to-be-processed variable text.

In determination manner 2, a first background image located in the middle of the preset background image sequence is removed in a case that N1 is greater than N2, so that the target background image sequence matches the preset background image sequence at the boundary position.

The middle may be different from the head or the tail. Moreover, the at least two removed frames of first background images are not continuously distributed in the preset background image sequence. In this way, the problem of poor continuity of the background image caused by removing continuous background images can be avoided to a certain extent.

In a practical application, the number of first background images may be equal to a difference between N1 and N2. For example, the information of the preset background image sequence includes: a start frame number 100 and an end frame number 125, etc. A value of N1 is 26. Assuming that the number of corresponding images N2 in the target moving image sequence is 24, two frames of first background images located in the middle and discontinuous in position are removed from the preset background image sequence.

In determination manner 3, a second background image is added to the preset background image sequence in a case that N1 is less than N2, so that the target background image sequence matches the preset background image sequence at the boundary position.

In an optional embodiment of this application, the second background image may be derived from the preset background image sequence. In other words, a to-be-added second background image may be determined from the preset background image sequence.

In one implementation, the preset background image sequence is determined as a first part of the target background image sequence in the forward order; and then the preset background image sequence is determined as a second part of the target background image sequence in the reverse order; next, the preset background image sequence is determined as a third part of the target background image sequence in the forward order. An end frame of the third part matches an end frame of the preset background image sequence.

For example, the information of the preset background image sequence includes: a start frame number 100 and an end frame number 125, etc. A value of N1 is 26. Assuming that the number of corresponding images N2 in the target moving image sequence is 30, a frame number corresponding to the first part of the target background image sequence is: 100→125. A frame number corresponding to the second part of the target background image sequence is: 125->124. A frame number corresponding to the third part of the target background image sequence is: 124-125.

In another optional embodiment of this application, the second background image may be derived from a background image sequence other than the preset background image sequence. For example, the second background image is determined from the background image sequence following the preset background image sequence.

In one implementation, the preset background image sequence is determined as a first part of the target background image sequence in the forward order; and then the background image sequence following the preset background image sequence is determined as a second part of the target background image sequence in the reverse order; next, the background image sequence following the preset background image sequence and an end frame of the preset background image sequence are determined as a third part of the target background image sequence in the reverse order. The end frame of the third part matches the end frame of the preset background image sequence.

For example, the information of the preset background image sequence includes: a start frame number 100 and an end frame number 125, etc. A value of N1 is 26. Assuming that the number of corresponding images N2 in the target moving image sequence is 30, a frame number corresponding to the first part of the target background image sequence is: 100→125. A frame number corresponding to the second part of the target background image sequence is: 126->127. A frame number corresponding to the third part of the target background image sequence is: 127-125.

It is to be understood that an implementation of adding the second background image to the preset background image sequence is merely an example. In fact, a person skilled in the art may adopt other implementations according to actual application requirements. Any implementation that can match the target background image sequence and the preset background image sequence at the boundary position falls within the protection scope of the implementation in the embodiments of this application.

For example, in another implementation, a reverse target background image sequence is also determined. A corresponding determination process of the reverse target background image sequence includes: determining the preset background image sequence as a first part of the target background image sequence in the reverse order; and then determining the preset background image sequence as a second part of the target background image sequence in the forward order; and next, determining the preset background image sequence as a third part of the target background image sequence in the reverse order. A start frame of the third part matches a start frame of the preset background image sequence.

For example, the information of the preset background image sequence includes: a start frame number 100 and an end frame number 125, etc. A value of N1 is 26. Assuming that the number of corresponding images N2 in the target moving image sequence is 30, a frame number corresponding to the first part of the target background image sequence is: 125→100. A frame number corresponding to the second part of the target background image sequence is: 100→101. A frame number corresponding to the third part of the target background image sequence is: 101→100. In this case, the obtained frame number of the target background image sequence is as follows: 100→101→101→100→100→125.

The process of generating a second video clip corresponding to the to-be-processed variable text is introduced in detail in technical solution 1 to technical solution 3. It is to be understood that a person skilled in the art may adopt one or a combination of technical solution 1 to technical solution 3 according to actual application requirements. The specific process of generating a second video clip corresponding to the to-be-processed variable text is not limited in the embodiments of this application.

At step 103, the first video clip is combined with the second video clip to obtain a video corresponding to the first text.

In one optional embodiment of this application, the first video clip may specifically include: a first speech segment. The second video may specifically include: a second speech segment.

Therefore, the combining the first video clip with the second video clip may specifically include: smoothing respective speech subsegments of the first speech segment and the second speech segment at a combining position; and combining the smoothed first speech segment with the smoothed second speech segment.

In all embodiments of the present disclosure, the smoothing is performed on respective speech subsegments of the first speech segment and the second speech segment at a combining position, and then the smoothed first speech segment is combined with the smoothed second speech segment. The smoothing can improve the smoothness of the first speech segment and the second speech segment, and therefore can improve the continuity of the first video clip and the second video clip at the combining position.

In a practical application, the video obtained by combining may be outputted, for example, to a user. For example, in a medical scenario, a corresponding to-be-processed variable text is determined according to a disease name included in the user input. A video is obtained by using the method embodiment shown in FIG. 1B and is provided for the user.

In conclusion, according to the video processing method in the embodiments of this application, the first video clip corresponding to the template text is combined with the second video clip corresponding to the variable text. The first video clip may be a pre-saved video clip. The second video clip corresponding to the variable text may be generated during the video processing. A length of the variable text is less than that of a first text. Therefore, the corresponding time cost of the generated video can be decreased in the embodiments of this application, and thus the video processing efficiency can be improved.

Moreover, in all embodiments of the present disclosure, the first video clip is configured to include: a paused video subclip at the boundary position between the template text and the variable text. The pausing processing can solve the intense changes of audios or pictures at the combining position to a certain extent, and therefore can improve the smoothness and continuity at the combining position.

### Method Embodiment 2

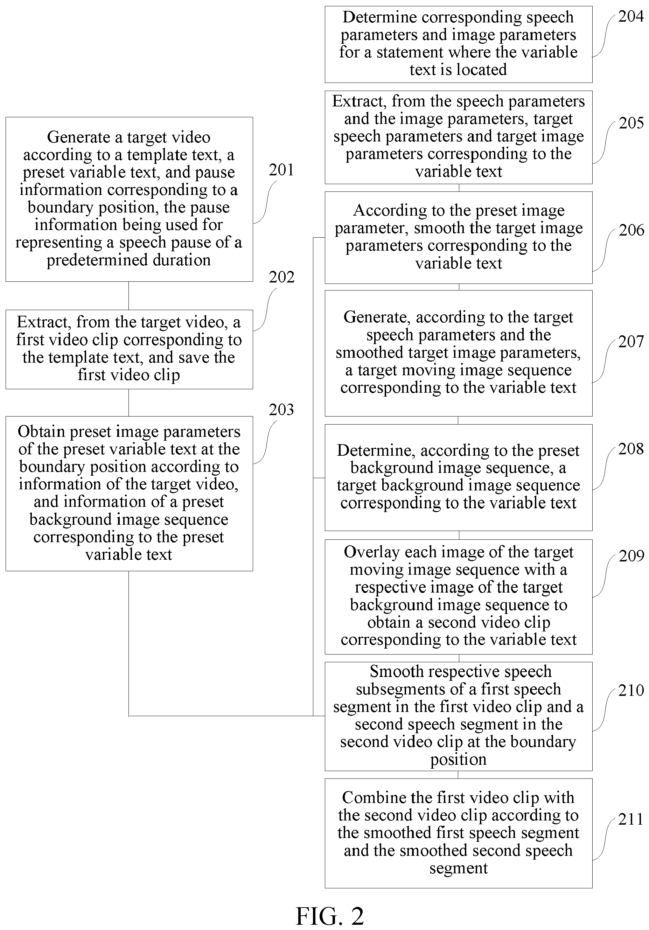

Referring to FIG. 2, FIG. 2 is a flowchart for a video processing method according to embodiments of this application. The method may specifically include the following steps:
Step 201: Generate a target video according to a template text, a preset variable text, and pause information corresponding to a boundary position, the pause information being used for representing a speech pause of a predetermined duration.
Step 202: Extract, from the target video, a first video clip corresponding to the template text, and save the first video clip.
Step 203: Obtain preset image parameters of the preset variable text at the boundary position according to information of the target video, and information of a preset background image sequence corresponding to the preset variable text.
At step 201 to step 203, the first video clip, the preset image parameters of the preset variable text at the boundary position, and the information of the preset background image sequence corresponding to the preset variable text may be pre-obtained based on the generated target video.
At step 204 to step 211, a second video clip corresponding to the variable text may be generated according to the pre-saved information, and the pre-saved first video clip is combined with the second video clip.
Step 204: Determine corresponding speech parameters and image parameters for a statement where the variable text is located.
Step 205: Extract, from the speech parameters and the image parameters, target speech parameters and target image parameters corresponding to the variable text.
Step 206: according to the preset image parameter, smooth the target image parameters corresponding to the variable text.
Step 207: Generate, according to the target speech parameters and the smoothed target image parameters, a target moving image sequence corresponding to the variable text.
Step 208: Determine, according to the preset background image sequence, a target background image sequence corresponding to the variable text.
Step 209: Overlay each image of the target moving image sequence with a respective image of the target background image sequence to obtain a second video clip corresponding to the variable text.
Step 210: Smooth respective speech subsegments of a first speech segment in the first video clip and a second speech segment in the second video clip at the boundary position.
Step 211: Combine the first video clip with the second video clip according to the smoothed first speech segment and the smoothed second speech segment.

In an application example of this application, assuming that a text is text A above, and preset variable texts are "<diabetes>", "<fruit>", "<1800>", etc. A target video is generated according to text A and corresponding pause information. A first video clip in the target video, preset image parameters of the preset variable texts at a boundary position, and information of preset background image sequences corresponding to the preset variable texts are saved.

In a practical application, a variable text may vary depending on factors such as a user input. For example, in a case that text A is changed into text B, that is, "about the items of <coronary heart disease> and <vegetable>, I'm still working on it. I think this dietary advice for <coronary heart disease> may also be helpful to you. It includes recommendations and taboos for about <900> ingredients. Please click to view", the variable texts include: "<coronary heart disease>", "<vegetable>", "<900>", etc. in text B.

In all embodiments of the present disclosure, a second video clip corresponding to a variable text may be generated. For example, acoustic parameters and lip features of a statement where a variable text is located are determined; and then target acoustic parameters and target lip features corresponding to the variable text are extracted from the acoustic parameters and the lip features, and a speech segment and a target image sequence corresponding to the variable text are respectively generated. The target image sequence may include: a target moving image sequence and a target background image sequence.

In the process of generating the target moving image sequence, step 206 may be used to smooth the target lip features to improve the continuity of the lip feature at a combining position.

Step 208 may be used to generate the target background image sequence to match the target background image sequence and a preset background image sequence at the boundary position so as to improve the continuity of a background image sequence at the combining position.

Before combining the first video clip with the second video clip, smoothing may be performed on respective speech subsegments of a first speech segment in the first video clip and a second speech segment in the second video clip at the boundary position; and then the first video clip is combined with the second video clip according to the smoothed first speech segment and the smoothed second speech segment.

In conclusion, according to the video processing method in the embodiments of this application, there is video subclip with a speech pause of a preset duration at the combining position of the first video clip and the second video clip, which is helpful to avoid the intense changes of audios or pictures at the combining position; therefore, the smoothness and continuity at the combining position can be improved.

Moreover, in all embodiments of the present disclosure, corresponding speech parameters and image parameters are determined by taking a statement where the to-be-processed variable text is located as a unit, and then target speech parameters and target image parameters corresponding to the variable text are extracted from the speech parameters and the image parameters. Speech parameters and image parameters corresponding to the statement have a certain continuity. Therefore, the target speech parameter and the target image parameter corresponding to the to-be-processed variable text and extracted from the speech parameter and the image parameter, and a speech parameter and an image parameter corresponding to the template text in the statement have a certain continuity. On this basis, the continuity of the second video clip corresponding to the to-be-processed variable text, and a first video clip corresponding to the template text in the statement can be improved, thereby further improving the continuity at the combining position.

In addition, in all embodiments of the present disclosure, smoothing is performed, according to preset image parameters of the preset variable text at the boundary position, on target image parameters corresponding to the variable text. The preset image parameter of the preset variable text at the boundary position, and the image parameter of the template text at the boundary position have a certain continuity. Therefore, the smoothing can improve the smoothness and continuity of the target image parameter and the image parameter of the template text at the boundary position. On this basis, the continuity of a combination of the second video clip corresponding to the variable text and a first video clip corresponding to the template text in the statement can be improved, thereby improving the smoothness and continuity at the combining position.

In addition, in all embodiments of the present disclosure, the target background image sequence is generated according to the preset background image sequence, so that the target background image sequence matches the preset background image sequence at the boundary position to improve the continuity of the background image sequence at the combining position.

Furthermore, in all embodiments of the present disclosure, before combining the first video clip to the second video clip, smoothing processing is performed on respective speech subsegments of a first speech segment in the first video clip and a second speech segment in the second video clip at the boundary position; The smoothing processing can improve the continuity of the first speech segment and the second speech segment which are subjected to the smoothing processing, and therefore can improve the continuity of the first video clip and the second video clip at the combining position.

The foregoing method embodiments are expressed as a series of motion action combinations for the purpose of brief description, but a person skilled in the art knows that because some steps may be performed in other sequences or simultaneously according to the embodiments of this application, the embodiments of this application are not limited to a described motion action sequence. In addition, a person skilled in the art also knows that the embodiments described in this description are all preferred embodiments; and therefore, a motion action involved is not necessarily mandatory in the embodiments of this application.

### Apparatus embodiment

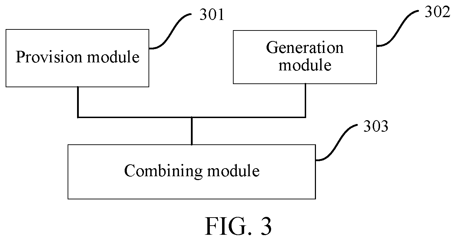

Referring to FIG. 3, FIG. 3 is a structural block diagram of a video processing apparatus according to this application. The apparatus may specifically include:
a provision module 301, configured to acquire a first video clip, the first video clip corresponding to a template text in a first text, and the first video clip including a video subclip with a speech pause, and a position of the video subclip in the first video clip corresponding to a boundary position between the template text and a variable text in the first text;
a generation module 302, configured to generate a second video clip corresponding to the to-be-processed variable text; and
a combining module 303, configured to combine the first video clip with the second video clip to obtain a video corresponding to the first text.

Optionally, the apparatus may further include:
a target video generation module, configured to generate a target video according to the template text, a preset variable text, and pause information corresponding to the boundary position, the pause information being used for representing a speech pause of a predetermined duration; and
a capture module, configured to extract, from the target video, the first video clip corresponding to the template text.

Optionally, the generation module 302 may include:
a parameter determination module, configured to determine corresponding speech parameters and image parameters for a statement where the variable text is located in the first text, the image parameter being used for representing a state feature of a virtual object to appear in the video corresponding to the first text, and the speech parameters being used for representing parameters for TTS;
a parameter extraction module, configured to extract, from the speech parameter and the image parameters, target speech parameters and target image parameters corresponding to the variable text; and
a first clip generation module, configured to generate, according to the target speech parameters and the target image parameters, the second video clip corresponding to the variable text.

Optionally, the generation module 302 may include:
a first smoothing processing module, configured to according to a preset image parameter of the to-be-processed variable text at the boundary position, smooth target image parameters corresponding to the variable text so as to improve the continuity of the target image parameters and image parameters of the template text at the boundary position; and
a second clip generation module, configured to generate, according to the smoothness target image parameters, the second video clip corresponding to the variable text.

Optionally, the first video clip may include: a first speech segment. The second video clip may include: a second speech segment.

The combining module 303 may include:
a second smoothing processing module, configured to smooth respective speech subsegments of the first speech segment and the second speech segment at the combining position; and
a post-smoothing combining module, configured to combine the smoothed first speech segment with the smoothed second speech segment.

Optionally, the image sequence corresponding to the video may include: a background image sequence and a moving image sequence.

The generation module 302 may include:
a moving image sequence generation module, configured to generate a target moving image sequence corresponding to the variable text;
a background image sequence generation module, configured to determine, according to a preset background image sequence, a target background image sequence corresponding to the variable text; and
a fusion module, configured to overlay each image of the target moving image sequence with a respective image of the target background image sequence to obtain the second video clip corresponding to the variable text.

Optionally, background images in the target background image sequence located at the head and tail match background images in the preset background image sequence located at the head and tail.

Optionally, the background image sequence generation module may include:
a first background image sequence generation module, configured to determine the preset background image sequence as the target background image sequence in a case that the number of corresponding images in the preset background image sequence is equal to the number of corresponding images in the target moving image sequence; or
a second background image sequence generation module, configured to remove a first background image located in the middle of the preset background image sequence in a case that the number of corresponding images in the preset background image sequence is greater than the number of corresponding images in the target moving image sequence, in a case that at least two frames of first background images are removed, the at least two frames of first background images being not continuously distributed in the preset background image sequence; or
a third background image sequence generation module, configured to add a second background image to the preset background image sequence in a case that the number of corresponding images in the preset background image sequence is less than the number of corresponding images in the target moving image sequence.

An apparatus embodiment is basically similar to a method embodiment, and therefore is described briefly. For related parts, refer to partial descriptions in the method embodiments.

The embodiments in this description are all described in a progressive manner. Descriptions of each embodiment focus on differences from other embodiments, and same or similar parts among respective embodiments may be mutually referenced.

The specific manners of performing operations by the various modules of the apparatuses in the foregoing embodiments are described in detail in the embodiments related to the method, and are not further described in detail herein.

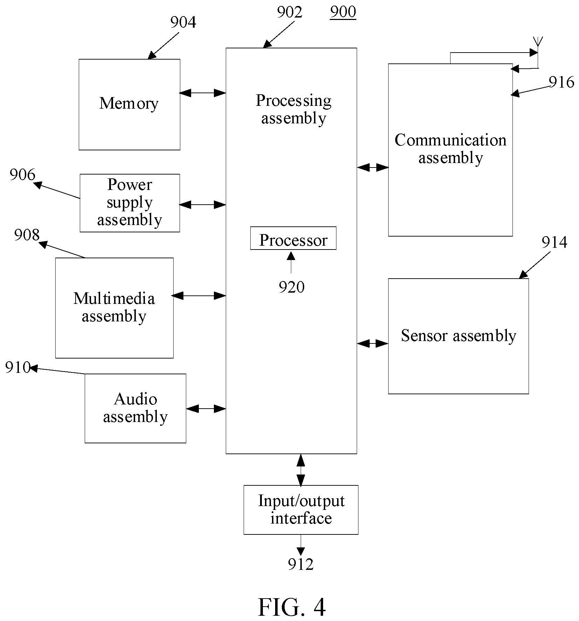

FIG. 4 is a structural block diagram of an apparatus 900 for video processing according to an exemplary embodiment. For example, the apparatus 900 is a mobile phone, a computer, a digital broadcasting terminal, a messaging device, a game console, a tablet device, a medical device, a fitness facility, a personal digital assistant, etc.

Referring to FIG. 4, the apparatus 900 may include one or more of the following assemblies: a processing assembly 902, a memory 904, a power supply assembly 906, a multimedia assembly 908, an audio assembly 910, an input/output (I/O) interface 912, a sensor assembly 914, and a communication assembly 916.

The processing assembly 902 usually controls the whole operation of the apparatus 900, such as operations associated with displaying, a phone call, data communication, a camera operation, and a recording operation. The processing assembly 902 may include one or more processors 920 to execute instructions, to complete all or some steps of the foregoing method. In addition, the processing assembly 902 may include one or more modules, to facilitate an interaction between the processing assembly 902 and other assemblies. For example, the processing assembly 902 includes a multimedia module, to facilitate an interaction between the multimedia assembly 908 and the processing assembly 902.

The memory 904 is configured to store various types of data to support operations on the apparatus 900. Examples of the data include instructions, contact data, phonebook data, messages, pictures, videos, and the like of any application or method used to be operated on the apparatus 900. The memory 904 can be implemented by any type of volatile or non-volatile storage devices or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disc, or an optical disc.

The power supply assembly 906 provides power to various assemblies of the apparatus 900. The power supply assembly 906 may include a power supply management system, one or more power supplies, and other assemblies associated with generating, managing and allocating power to the apparatus 900.

The multimedia assembly 908 includes a screen providing an output interface between the apparatus 900 and a user. In some embodiments, the screen may include a liquid crystal display (LCD) and a touch panel (TP). If the screen includes a TP, the screen may be implemented as a touchscreen to receive an input signal from the user. The TP includes one or more touch sensors to sense touching, sliding, and gestures on the TP. The touch sensor may not only sense the boundary of touching or sliding operations, but also measure duration and pressure related to the touching or sliding operations. In some embodiments, the multimedia assembly 908 includes a front camera and/or a rear camera. In a case that the apparatus 900 is in an operation mode, such as a shooting mode or a video mode, the front camera and/or the rear camera may receive external multimedia data. Each front camera and rear camera may be a fixed optical lens system or have a focal length and an optical zooming capability.

The audio assembly 910 is configured to output and/or input an audio signal. For example, the audio assembly 910 includes a microphone (MIC), and in a case that the apparatus 900 is in an operation mode, such as a call mode, a recording mode, and a speech recognition mode, the MIC is configured to receive an external audio signal. The received audio signal may be further stored in the memory 904 or sent through the communication assembly 916. In some embodiments, the audio assembly 910 further includes a loudspeaker, configured to output an audio signal.

The I/O interface 912 provides an interface between the processing assembly 902 and a peripheral interface module. The peripheral interface module may be a keyboard, a click wheel, buttons, etc. The buttons may include, but not limited to: a homepage button, a volume button, a start-up button, and a locking button.

The sensor assembly 914 includes one or more sensors, configured to provide state evaluation in each aspect to the apparatus 900. For example, the sensor assembly 914 detects an opened/closed state of the apparatus 900, and relative positioning of the assembly. For example, the assembly is a display and a small keyboard of the apparatus 900. The sensor assembly 914 further detects the position change of the apparatus 900 or one assembly of the apparatus 900, the existence or nonexistence of contact between the user and the apparatus 900, the azimuth or acceleration/deceleration of the apparatus 900, and the temperature change of the apparatus 900. The sensor assembly 914 may include a proximity sensor, configured to detect the existence of nearby objects without any physical contact. The sensor assembly 914 may further include an optical sensor, such as a CMOS or CCD image sensor, which is used in an imaging application. In some embodiments, the sensor assembly 914 may further include an acceleration sensor, a gyroscope sensor, a magnetic sensor, a pressure sensor, or a temperature sensor.

The communication assembly 916 is configured to facilitate communication between the apparatus 900 and other devices in a wired or wireless manner. The apparatus 900 may access a wireless network on the basis of communication standards such as WiFi, 2G, or 3G, or a combination thereof. In an exemplary embodiment, the communication assembly 916 receives a broadcast signal or broadcast related information from an external broadcast management system via a broadcast channel. In an exemplary embodiment, the communication assembly 916 further includes a near-field communication (NFC) module, to promote short-range communication. For example, the NFC module is implemented on the basis of a radio frequency identification (RFID) technology, an infrared data association (IrDA) technology, an ultra wideband (UWB) technology, a Bluetooth (BT) technology, and other technologies.

In an exemplary embodiment, the apparatus 900 is implemented as one or more application-specific integrated circuit (ASIC), a digital signal processor (DSP), a digital signal processing device (DSPD), a programmable logic device (PLD), a field programmable gate array (FPGA), a controller, a micro-controller, a microprocessor or other electronic components, so as to perform the method.

In an exemplary embodiment, also provided is a non-transitory computer readable storage medium including instructions, for example, a memory 904 including instructions. The foregoing instructions may be executed by a processor 920 of the apparatus 900 to complete the foregoing method. For example, the non-transitory computer readable storage medium is a ROM, a random access memory (RAM), a CD-ROM, a magnetic tape, a floppy disk, an optical data storage device, etc.

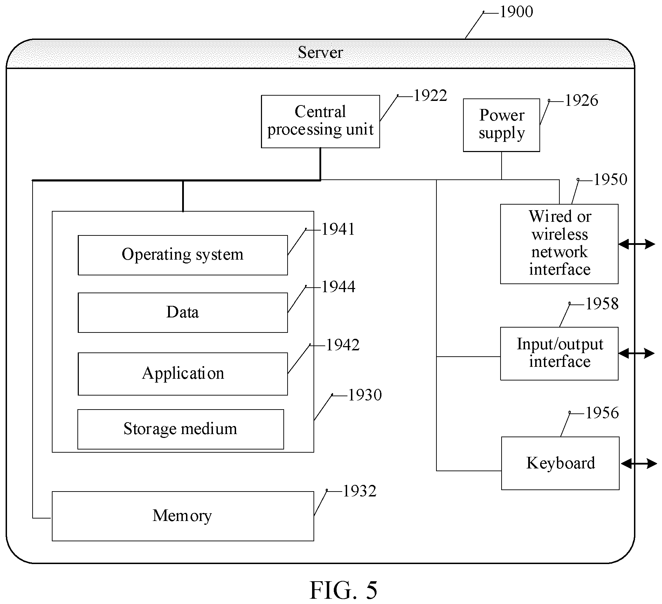

FIG. 5 is a structural block diagram of a server according to some embodiments of this application. The server 1900 may vary greatly due to different configurations or performance, and may include one or more central processing units (CPUs) 1922 (for example, one or more processors) and a memory 1932, and one or more storage media 1930 (for example, one or more mass storage devices) that store application programs 1942 or data 1944. The memories 1932 and the storage media 1930 may be used for transient storage or permanent storage. A program stored in the storage medium 1930 may include one or more modules (which are not marked in the figure), and each module may include a series of instruction operations on the server. Furthermore, the CPU 1922 may be configured to communicate with the storage medium 1930, and perform, on the server 1900, a series of instruction operations in the storage medium 1930.

The server 1900 may further include one or more power supplies 1926, one or more wired or wireless network interfaces 1950, one or more I/O interfaces 1958, one or more keyboards 1956, and/or, one or more operating systems 1941, for example, Windows ServerTM, Mac OS XTM, UnixTM, LinuxTM, and FreeBSDTM.

A non-transitory computer readable storage medium, the instruction stored in the storage medium, when executed by a processor of an apparatus (a device or a server), causing the apparatus to perform the video processing method according to the embodiments of this application.

After considering the description and practicing the invention disclosed herein, a person skilled in the art would easily conceive of other implementations of this application. This application is intended to cover any variation, use, or adaptive change of this application. These variations, uses, or adaptive changes follow the general principles of this application and include common general knowledge or common technical means, which are not disclosed in the present disclosure, in the art. The description and embodiments are merely considered to be exemplary, and the actual scope of this application is pointed out in the following claims.

It is to be understood that this application is not limited to the precise structures described above and shown in the accompanying drawings, and various modifications and changes can be made without departing from the scope of this application. The scope of this application is only limited by the appended claims.

The foregoing descriptions are merely preferred embodiments of this application, and are not intended to limit this application. Any modification, equivalent replacement, improvement and the like made within the principle of this application shall fall within the protection scope of this application.

The video processing method, the video processing apparatus, and the apparatus for video processing provided in the embodiments of this application are described in detail above. The principle and implementations of this application are described herein by using specific examples. The descriptions of the foregoing embodiments are merely used for helping understand the method and core ideas of this application. Moreover, a person skilled in the art may make modifications to the specific implementations and application scopes according to the ideas of this application. To conclude, the content of the description is not understood as a limitation to this application.

## Claims

1. A video processing method, executable by an electronic device, the method comprising:
acquiring a first video clip, the first video clip corresponding to a template text in a first text, and the first video clip comprising a video subclip with a speech pause, and a position of the video subclip in the first video clip corresponding to a boundary position between the template text and a variable text in the first text;
generating a second video clip corresponding to the variable text; and
combining the first video clip with the second video clip to obtain a video corresponding to the first text.

2. The method according to claim 1, further comprising:
obtaining a target video corresponding to the template text, a preset variable text, and pause information corresponding to the boundary position, the pause information being used for representing a speech pause of a predetermined duration; and
extracting, from the target video, the first video clip.

3. The method according to claim 1, wherein a virtual object in an image of the video subclip is in a non-speaking state.

4. The method according to any one of claims 1-3, further comprising:
pausing the video subclip, comprising:
replacing a speech signal subsegment of the video subclip with an audio segment without a speech voice, as the speech signal subsegment with the speech pause; and
overlaying each image of an image subsequence of the video subclip with a respective image of an image sequence with a target state feature to obtain the overlayed image subsequence where a virtual object is in the non-speaking state, the target state feature being a feature used for representing that the virtual object is in the non-speaking state.

5. The method according to any one of claims 1-3, wherein the generating a second video clip corresponding to the variable text comprises:
determining speech parameters and image parameters for a statement where the variable text is located in the first text, the image parameters being used for representing state features of a virtual object to appear in the video corresponding to the first text, and the speech parameters being used for representing parameters for text to speech;
extracting, from the speech parameters and the image parameters, target speech parameters and target image parameters corresponding to the variable text; and
generating, according to the target speech parameters and the target image parameters, the second video clip corresponding to the variable text.

6. The method according to any one of claims 1-3, wherein the generating a second video clip corresponding to the variable text comprises:
according to preset image parameters of the variable text at the boundary position, smoothing target image parameters corresponding to the variable text; and
generating, according to the smoothed target image parameters, the second video clip corresponding to the variable text.

7. The method according to any one of claims 1-3, wherein the first video clip comprises: a first speech segment; the second video clip comprises: a second speech segment;
the combining the first video clip to the second video clip comprises:
smoothing a first speech subsegment of the first speech segment at a combining position and a second speech subsegment of the second speech segment at the combining position; and
combining the smoothed first speech segment with the smoothed second speech segment.

8. The method according to any one of claims 1-3, wherein an image sequence corresponding to the video comprises: a background image sequence and a moving image sequence;
the generating a second video clip corresponding to the variable text comprises:
generating a target moving image sequence corresponding to the variable text;
determining, according to a preset background image sequence, a target background image sequence corresponding to the variable text; and
overlaying each image of the target moving image sequence with a respective image of the target background image sequence to obtain the second video clip corresponding to the variable text.

9. The method according to claim 8, wherein background images in the target background image sequence located at the head and tail match background images in the preset background image sequence located at the head and tail.

10. The method according to claim 8, wherein the determining, according to a preset background image sequence, a target background image sequence corresponding to the variable text comprises:
determining the preset background image sequence as the target background image sequence in a case that a quantity of images in the preset background image sequence is equal to a quantity of images in the target moving image sequence; or
removing at least one first background image located in the middle of the preset background image sequence in a case that the quantity of images in the preset background image sequence is greater than the quantity of images in the target moving image sequence, in a case that at least two frames of first background images are removed, the at least two frames of first background images being not continuously distributed in the preset background image sequence; or
adding a second background image to the preset background image sequence in a case that the quantity of images in the preset background image sequence is less than the quantity of images in the target moving image sequence.

11. A video processing apparatus, comprising:
a provision module, configured to acquire a first video clip, the first video clip corresponding to a template text in a first text, and the first video clip comprising a video subclip with a speech pause, and a position of the video subclip in the first video clip corresponding to a boundary position between the template text and a variable text in the first text;
a generation module, configured to generate a second video clip corresponding to the variable text; and
a combining module, configured to combine the first video clip with the second video clip to obtain a video corresponding to the first text.

12. The apparatus according to claim 9, further comprising:
a preset video generation module, configured to obtain a target video corresponding to the template text, a preset variable text, and pause information corresponding to the boundary position, the pause information being used for representing a speech pause of a predetermined duration; and
a capture module, configured to extract, from the target video, the first video clip.

13. The apparatus according to claim 9 or 10, wherein the generation module comprises:
a parameter determination module, configured to determine speech parameters and image parameters for a statement where the variable text is located in the first text, the image parameters being used for representing state features of a virtual object to appear in the video corresponding to the first text, and the speech parameters being used for representing parameters for text to speech;
a parameter extraction module, configured to extract, from the speech parameters and the image parameters, target speech parameters and target image parameters corresponding to the variable text; and
a first clip generation module, configured to generate, according to the target speech parameters and the target image parameters, the second video clip corresponding to the variable text.

14. The apparatus according to claim 9 or 10, wherein the generation module comprises:
a first smoothing processing module, configured to, smooth target image parameters corresponding to the variable text, according to preset image parameters of the variable text at the boundary position; and
a second clip generation module, configured to generate, according to the smoothed target image parameters, the second video clip corresponding to the variable text.

15. The apparatus according to claim 9 or 10, wherein the first video clip comprises: a first speech segment; the second video clip comprises: a second speech segment;
the combining module comprises:
a second smoothing processing module, configured to smooth a first speech subsegment of the first speech segment at a combining position and a second speech subsegment of the second speech segment at the combining position; and
a post-smoothing combining module, configured to combine the smoothed first speech segment with the smoothed second speech segment.

16. An apparatus for video processing, comprising a memory and one or more programs stored in the memory, the program, when executed by one or more processors, implementing the steps of the method according to any one of claims 1-10.

17. A machine-readable medium, storing an instruction, the instruction, when executed by one or more processors, causing an apparatus to perform the video processing method according to one or more of claims 1-10.

18. A computer program product, comprising a computer instruction stored in a computer-readable storage medium, the computer instruction, when executed by a processor, causing the processor to perform the method according to any one of claims 1 -10.
